# EUROPÄISCHE PATENTSCHRIFT

(11) **EP 0 880 766 B1**
(45) Veröffentlichungstag und Bekanntmachung des Hinweises auf die Patenterteilung: **29.03.2000**
(21) Anmeldenummer: 97904438.5
(22) Anmeldetag: 13.02.1997
(51) Int. Cl.: G08B 17/10

(54) **VERFAHREN ZUR LUFTSTROMÜBERWACHUNG IN EINER BRANDERKENNUNGSVORRICHTUNG SOWIE BRANDERKENNUNGSVORRICHTUNG ZUR DURCHFÜHRUNG DES VERFAHRENS**
METHOD OF MONITORING AIR FLOW IN A FIRE-DETECTION DEVICE AND FIRE-DETECTION DEVICE FOR CARRYING OUT THE METHOD
PROCEDE DE CONTROLE DU FLUX D'AIR CIRCULANT DANS UN DISPOSITIF DE DETECTION D'INCENDIES ET DISPOSITIF DE DETECTION D'INCENDIE APPROPRIE POUR METTRE LEDIT PROCEDE EN OEUVRE

(30) Priorität: 15.02.1996 DE 19605637
(43) Veröffentlichungstag der Anmeldung: 02.12.1998
(73) Patentinhaber: Wagner Alarm- und Sicherungssysteme GmbH, 30853 Langenhagen (DE)
(72) Erfinder: BASTIAN, Bernhard, D-56566 Neuwied (DE); BURKHARDT, Lutz, D-30165 Hannover (DE); LEWONIG, Horst, D-30655 Hannover (DE)
(74) Vertreter: Rupprecht, Kay, Dipl.-Ing.
(86) Internationale Anmeldenummer: EP9700681
(87) Internationale Veröffentlichungsnummer: WO9730426

(56) Entgegenhaltungen:
- FR-A- 2 276 577
- FR-A- 2 518 287
- FR-A- 2 551 215
- FR-A- 2 670 010

## Beschreibung

Die vorliegende Erfindung betrifft sowohl ein Verfahren zur Luftstromüberwachung in einer Branderkennungsvorrichtung, die mittels eines Lüfters kontinuierlich Raum- oder Geräteluft durch ein erstes und ein zweites Ansaugrohr oder Ansaugrohrsystem ansaugt und wenigstens einem Detektor zum Erkennen einer Brandkenngröße zuführt, als auch eine Branderkennungsvorrichtung zur Durchführung des Verfahrens. Ausgangspunkt ist eine Branderkennungsvorrichtung mit einem ersten Detektor zum Erkennen einer Brandkenngröße in einer ersten Melderkammer, dem durch ein erstes Ansaugrohr oder Ansaugrohrsystem mittels eines Lüfters ein repräsentativer Volumenteil einer Raum- oder Geräteluft zugeführt wird, und mit einem ersten Luftstromsensor, mit dem der Massenstrom der durch das erste Ansaugrohr bzw. das erste Ansaugrohrsystem zugeführten Luft auf Änderungen überwacht wird.

Unter dem Begriff "Brandkenngröße" werden physikalische Größen verstanden, die in der Umgebung eines Entstehungsbrandes meßbaren Veränderungen unterliegen, z.B. die Umgebungstemperatur, der Feststoff- oder Flüssigkeits- oder Gasanteil in der Umgebungsluft (Bildung von Rauchpartikeln oder Rauchaerosolen oder Bildung von Dampf) oder die Umgebungsstrahlung.

Sowohl Verfahren als auch Branderkennungsvorrichtungen der genannten Art sind bekannt und dienen der Frühesterkennung von Bränden bereits in ihrer Entstehungsphase. Typische Anwendungsbereiche sind entweder Räume mit hochwertigen oder wichtigen Einrichtungen, wie beispielsweise Räume mit EDV-Anlagen in Banken od. dgl., oder aber die EDV-Anlagen selbst. Zu diesem Zweck werden der Raumluft oder der Gerätekühlluft ständig repräsentative Teilmengen entnommen und über Ansaugrohre bzw. - kanäle dem Detektor zum Erkennen einer Brandkenngröße zugeführt. Zum Ansaugen der Raum- oder Gerätekühlluft sind die Ansaugrohre bzw. -kanäle mit Ansaugöffnungen versehen. Eine wichtige Voraussetzung für das Erkennen eines Entstehungsbrandes im frühesten Stadium besteht darin, daß die Branderkennungsvorrichtung ununterbrochen eine ausreichend repräsentative Luftmenge ansaugen und dem Detektor in der Melderkammer zuführen kann. Eine weitere wichtige Voraussetzung zum Erreichen dieses Ziels besteht darin, daß sämtliche Ansaugöffnungen auch kontinuierlich den für sie vorgesehenen Öffnungsquerschnitt behalten, d.h. nicht verstopfen. Eine andere unerwünschte Störung des Ansaugsystems besteht beispielsweise in einem Bruch eines Ansaugrohrs. Es ist also wichtig, daß bei gleichbleibender Saugleistung eines Lüfters durch alle Ansaugöffnungen kontinuierlich eine definierte Luftmasse augesaugt wird, somit in dem Ansaugsystem definierte Strömungsverhältnisse vorliegen. Um das zu überwachen, wird üblicherweise die Strömungsgeschwindigkeit bzw. der Volumenstrom der angesaugten Raum- oder Geräteluft mittels eines Luftstromsensors auf Änderungen überwacht. Hierzu ist es beispielsweise aus der DE 33 31 203 A1 bekannt, einen thermischen Luftstromsensor zu verwenden, bei dem die Abkühlung eines beheizten Sensorelements das Maß für den Luftstrom ist. Diese Abkühlung hängt davon ab, wieviele Luftmoleküle pro Zeiteinheit an dem beheizten Sensorelement vorbeiströmen. Damit ist das Ausgangssignal des thermischen Luftstromsensors ein Maß für den Massenstrom der angesaugten Raum- oder Geräteluft.

In Deutschland hat beispielsweise der Verband der Schadenversicherer (VdS) Richtlinien für die Luftstromüberwachung herausgegeben, nach denen bei der Überwachung eines großen Raumes dann eine Störung zu melden ist, wenn die Hälfte der Ansaugfläche verstopft ist, oder wenn ein Ansaugrohr bricht. Sollen mit einem Rauchansaugsystem mehrere untereinander abgeschlossene Räume überwacht werden, so ist eine 50%-ige Verstopfung der Ansaugöffnungen je Raum zu erkennen. Ein Bruch ist auch am Ende des Ansaugrohrsystems kurz vor der letzten Ansaugöffnung zu detektieren, was wegen des Druckabfalls über die Rohrlänge besonders schwierig ist. Für die Überwachung von zehn getrennten Räumen mit je zwei Ansaugöffnungen ist beispielsweise dann eine Störung zu melden, wenn eine der 20 Ansaugöffnungen verstopft. Es ist ohne weiteres ersichtlich, daß diese Vorgaben hohe Anforderungen an die Luftstromüberwachung stellen. Da nämlich der Massenstrom der angesaugten Raum- oder Geräteluft mittels des Luftstromsensors innerhalb einer Bandbreite zwischen einem oberen und einem unteren Schwellwert überwacht wird, ist es erstrebenswert, diese Bandbreite so gering wie möglich zu halten, um auch nur langsam und in kleinen Schritten fortschreitende Verstopfungen zu detektieren. Hierbei haben allerdings Erfahrungen gezeigt, daß das Ausgangssignal des Luftstromsensors bei Luftdruckschwankungen ebenfalls Schwankungen ausgesetzt war, so daß das Ausgangssignal des Luftstromsensors die vorgegebenen Schwellwerte ohne Vorliegen eines wirklichen Störfalles über- bzw. unterschritten hat. Solche Luftdruckschwankungen, wie sie beispielsweise schon durch das Öffnen und das Schließen der Tür eines begehbaren Banksafes oder eines überdruckgesicherten Bereichs bei der Herstellung von elektronischen Chips entstehen, hätten wiederum zur Folge, daß die Bandbreite zwischen dem oberen und dem unteren Schwellwert zur Vermeidung dieses Effekts wieder vergrößert werden müßte. Das brächte allerdings den Nachteil mit sich, daß die Luftstromüberwachung bei auftretenden Störungen der angestrebten kontinuierlichen Strömungsverhältnisse nicht sensibel genug reagieren könnte und folglich auch die Branderkennungsvorrichtung den an sie gestellten Anforderungen eines frühestmöglichen Erkennens von Entstehungsbränden nicht gerecht werden könnte.

An diesem Problem setzt die vorliegende Erfindung an, als deren Aufgabe es angesehen wurde, die Empfindlichkeit des Luftstromsensors, und damit die Verläßlichkeit der gesamten Branderkennungsvorrichtung, wirksam zu steigern.

Diese Aufgabe wird durch ein Verfahren zur Luftstromüberwachung in einer Branderkennungsvorrichtung gelöst, das zwei alternative Merkmalskombinationen von Verfahrensschritten enthält. Beiden alternativen Merkmalskombinationen ist gemeinsam, daß ein erster Luftstromsensor den Massenstrom der durch das erste Ansaugrohr bzw. Ansaugrohrsystem zugeführten Luft auf Änderungen überwacht, und ein zweiter Luftstromsensor den Massenstrom der durch das zweite Ansaugrohr bzw. Ansaugrohrsystem zugeführten Luft. Gemäß einer ersten Alternative wird die Differenz des Ausgangssignals eines ersten Luftstromsensors und des Ausgangssignals eines zweiten Luftstromsensors gebildet, danach das Differenzsignal auf Null abgeglichen, und danach die Auswertung zur Luftstromüberwachung anhand des abgeglichenen Differenzsignals durchgeführt. Gemäß einer zweiten Alternative werden sowohl die Differenz als auch die Summe des Ausgangssignals eines ersten Luftstromsensors und des Ausgangssignals eines zweiten Luftstromsensors gebildet, danach sowohl das Differenzsignal als auch das Summensignal auf Null abgeglichen, und danach die Auswertung zur Luftstromüberwachung anhand der abgeglichenen Differenz- bzw. Summensignale durchgeführt.

Beiden Alternativen ist der Einsatz von zwei Luftstromsensoren und das Bilden der Signaldifferenz gemeinsam. Hierbei ist ein Luftstromsensor für die Überwachung eines ersten Ansaugrohrsystems zuständig, und der andere Luftstromsensor für die Überwachung eines zweiten Ansaugrohrsystems. Die Signaldifferenz wird bei Inbetriebnahme der Branderkennungsvorrichtung auf Null eingestellt, wenn alle Ansaugöffnungen ihren vollen Ansaugquerschnitt aufweisen. Verstopft dann beispielsweise eine Ansaugöffnung im Rohrsystem 1, strömt weniger Luft durch dieses Rohrsystem, was durch den ersten Luftstromsensor mit einem entsprechend geänderten Ausgangssignal quittiert wird. Da in dem Ansaugrohrsystem eine konstante Ansaugleistung erzeugt wird, strömt gleichzeitig mehr Luft durch das Rohrsystem 2, was der für dieses Rohrsystem zuständige Luftstromsensor ebenfalls mit einem (entgegengesetzt) geänderten Ausgangssignal quittiert. Die Signaldifferenz beider Luftstromsensoren zeigt also eine doppelte Änderung gegenüber den einzelnen Ausgangssignalen der Luftstromsensoren, und das Differenzsignal U1 - U2 ist negativ. Bei einem Bruch im Rohr 1 demgegenüber ist das Differenzsignal U1 - U2 positiv.

Da sich die Umgebungsparameter, und hier insbesondere der Luftdruck, gleichzeitig auf beide Luftstromsensoren und beide Ansaugrohrsysteme auswirken, ist die erfindungsgemäß zur Auswertung herangezogene Signaldifferenz weitestgehend luftdruckunabhängig, so daß die Bandbreite zwischen dem oberen und dem unteren Schwellwert sehr eng gewählt werden kann. Die Vorteile beider erfindungsgemäßen Alternativen bestehen somit insbesondere darin, daß die Luftstromüberwachung sensibler ist, als bei bekannten Verfahren, so daß beispielsweise eine größere Anzahl getrennter Räume oder Geräte mit einer einzigen Branderkennungsvorrichtung überwacht werden kann. Der daraus wiederum resultierende Vorteil besteht in einer preiswerteren Lösung.

Der Unterschied des Verfahrens gemäß der zweiten Alternative zu dem vorstehend beschriebenen Verfahren besteht darin, daß bei der zweiten Alternative auch die Summe des Ausgangssignals des ersten Luftstromsensors und des zweiten Luftstromsensors gebildet, auch das Summensignal auf Null abgeglichen und danach die Auswertung zur Luftstromüberwachung anhand der abgeglichenen Differenz- bzw. Summensignale durchgeführt wird. Der Vorteil der gleichzeitigen Summenbildung besteht darin, daß eine weitere Verfeinerung bei der Identifizierung sowohl der Art als auch des Ortes einer Störung festgestellt werden kann. Ist nämlich beispielsweise das Summensignal U1 + U2 negativ und das Differenzsignal U1 - U2 gleich Null, so liegt eine gleichmäßige Verstopfung in den Rohrsystemen 1 und 2 vor. Ist bei negativem Summensignal das Differenzsignal ebenfalls negativ, so liegt eine Verstopfung im Rohrsystem 1 vor, während bei negativem Summensignal und positivem Differenzsignal eine Verstopfung im Rohrsystem 2 vorliegt. Demgegenüber bedeutet ein positives Summensignal und ein gleichzeitig negatives Differenzsignal einen Rohrbruch im Rohrsystem 2, während ein positives Summensignal und gleichzeitig ein positives Differenzsignal einen Rohrbruch im Rohrsystem 1 indiziert.

Die der Erfindung zugrundeliegende Aufgabenstellung wird ferner durch eine Branderkennungsvorrichtung zur Durchführung beider alternativer Verfahren gelöst, die zusätzlich zu den eingangs genannten bekannten Merkmalen ein zweites Ansaugrohr oder Ansaugrohrsystem aufweist, durch das ebenfalls ein repräsentativer Volumenanteil einer Raum- oder Geräteluft angesaugt wird, einen zweiten Luftstromsensor zur Überwachung von Änderungen des Massenstroms der durch das zweite Ansaugrohr bzw. Ansaugrohrsystem zugeführten Luft, ferner ein Differenzglied, dem die Ausgangssignale des ersten und des zweiten Luftstromsensors zugeführt werden, ein erstes Abgleichglied zum Nullabgleich des Differenzsignals des Differenzglieds, eine Auswerteschaltung mit je einem vorgebbaren unteren und oberen Schwellenwert, der das Ausgangssignal des ersten Abgleichglieds zugeführt wird, und eine Anzeigeeinheit, die in Abhängigkeit des Ausgangssignals der Auswerteschaltung eine Störung anzeigt. Sämtliche elektronische Bauteile können selbstverständlich auch softwaremäßig durch einen Mikroprozessor realisiert werden. Die Vorteile dieser erfindungsgemäßen Branderkennungsvorrichtung sind im wesentlichen dieselben, wie sie zu der ersten Alternative des erfindungsgemäßen Verfahrens beschrieben wurden. Durch den Einsatz von zwei Luftstromsensoren und das Bilden eines Differenzsignals aus den Ausgangssignalen der beiden Luftstromsensoren wird der Einfluß der Umgebungsparameter, und hier insbesondere der Einfluß von Luftdruckschwankungen, auf die Sensibilität der Branderkennungsvorrichtung weitestgehend ausgeschaltet. Neben der dadurch erzielbaren größeren Sensibilität der Branderkennungsvorrichtung ist es von Vorteil, daß auf eine Luftdruckkompensation, die einen teuren Luftdrucksensor erfordert, verzichtet werden kann. Das wiederum führt zu einer preiswerteren Konzeption der gesamten Vorrichtung.

Vorteilhafte Weiterbildungen der erfindungsgemäßen Branderkennungsvorrichtung sind in den Unteransprüchen angegeben.

So ist in Anlehnung an die zweite Alternative des erfindungsgemäßen Verfahrens ein Summenglied vorgesehen, dem ebenfalls die Ausgangssignale des ersten und des zweiten Luftstromsensors zugeführt werden, und ein zweites Abgleichglied zum Nullabgleich des Summensignals des Summenglieds, wobei das Ausgängssignal des zweiten Abgleichglieds ebenfalls der Auswerteschaltung zugeführt wird.

Eine weitere Erhöhung der Sensibilität der Branderkennungsvorrichtung und eine größere Ausfallsicherheit ist erzielbar, wenn zu dem ersten Detektor ein zweiter Detektor zum Erkennen einer Brandkenngröße in einer zweiten Melderkammer hinzukommt, dem ebenfalls ein repräsentativer Volumenanteil einer Raum- oder Geräteluft, vorzugsweise durch ein zweites Ansaugrohr oder durch ein zweites Ansaugrohrsystem, zugeführt wird. Hierzu ist ferner eine erste Trennwand zwischen der ersten und der zweiten Melderkammer vorgesehen, und eine verschließbare Öffnung in der ersten Trennwand, welche die Innenräume der beiden Melderkammern miteinander verbindet. Das Verschließen jener Verbindungsöffnung kann beispielsweise durch einen Blindstopfen erfolgen, der wahlweise zur Verbindung der beiden Melderkammern aus der verschließbaren Öffnung entfernt werden kann. Der große Vorteil dieser erfindungsgemäßen Weiterbildung liegt darin, daß aus zwei getrennten Melderkammern mit je einem Detektor eine einzige Kammer mit zwei Detektoren und der damit erzielbaren Zweimelderabhängigkeit hergestellt werden kann, oder umgekehrt. Diese Weiterbildung der Erfindung macht somit eine modulare Verwendung ein und derselben Branderkennungsvorrichtung möglich.

Um die Branderkennungsvorrichtung, die grundsätzlich für den Betrieb mit zwei Ansaugrohren oder zwei Ansaugrohrsystemen ausgerüstet ist, mit wenigen Handgriffen für den Betrieb mit nur einem Ansaugrohr oder einem Ansaugrohrsystem vorzubereiten, ist eine zweite Trennwand vorgesehen, welche die erste und die zweite Melderkammer in Richtung der durchströmenden Luft von der Lüfterkammer trennt, wobei wenigstens je eine weitere verschließbare Öffnung in der zweiten Trennwand vorgesehen ist, welche die erste und die zweite Melderkammer jeweils mit der Lüfterkammer verbindet. Die genannten Öffnungen können wieder wahlweise mittels je eines Blindstopfens geöffnet oder verschlossen werden, so daß eine Umrüstung durch Umstecken von zwei bzw. drei Stopfen mit wenigen Handgriffen erfolgen kann.

Da die Luftstromsensoren vorzugsweise als steckbare Module ausgebildet sind und um hilfsweise auch einen Betrieb der Branderkennungsvorrichtung mit nur einem Luftstromsensor zu ermöglichen, ist vorgesehen, daß eine der Melderkammern mittels zwei verschließbarer Öffnungen mit der Lüfterkammer verbunden ist, die beide durch die beschriebenen Blindstopfen einzeln oder gleichzeitig geöffnet oder verschlossen werden können.

Vorzugsweise ist eine dritte Trennwand zwischen der ersten und der zweiten Melderkammer vorgesehen, in der ebenfalls eine verschließbare Öffnung besteht, wobei zwischen der ersten und der dritten Trennwand ein Zwischenraum verbleibt. Darüber hinaus ist vorzugsweise vorgesehen, daß die erste und die dritte Trennwand je einen einwärts in die zugehörige Melderkammer gerichteten Abschnitt aufweisen. Die Vorteile dieser beiden Weiterbildungen bestehen insbesondere darin, daß die Melderkammern selbst kleiner gestaltet werden können, als ansonsten von der Breite des Gehäuses der Vorrichtung wegen der darin enthaltenen Schaltplatinen vorgegeben. Darüber hinaus dienen die schräg einwärts in die entsprechende Melderkammer gerichteten Abschnitte dazu, die einströmende Luft, welche in der Melderkammer zirkuliert, auf den Detektor zum Erkennen einer Brandkenngröße zu richten, wodurch wiederum die Detektionssicherheit erhöht wird.

Im folgenden wird ein bevorzugtes Ausführungsbeispiel der Erfindung anhand einer Zeichnung näher erläutert.

Es zeigen:
- Fig. 1: eine schematische Darstellung einer Raumüberwachung für zehn getrennte Räume mit zwei U-Ansaugrohrsystemen;
- Fig. 2: eine schematische Darstellung einer Einrichtungsüberwachung für unbelüftete Schränke mit jeweils zwei I- Ansaugrohrsystemen;
- Fig. 3a und 3b: eine Draufsicht auf die schematische Darstellung eines Detektorgehäuses mit einer ersten und einer zweiten Melderkammer;
- Fig. 4: ein prinzipielles Blockschaltbild einer Luftstromüberwachung für zwei Ansaugrohre oder Ansaugrohrsysteme; und
- Fig. 5: ein der Fig. 4 entsprechendes Blockschaltbild für die Anwendung bei einem Ansaugrohr oder Ansaugrohrsystem.

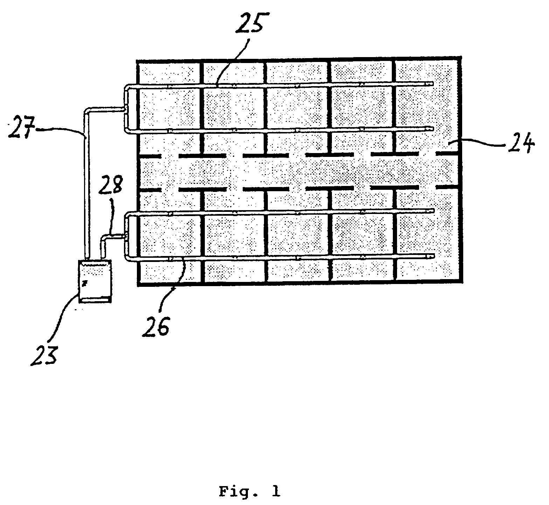

Fig. 1 zeigt das Prinzip einer Raumüberwachung mit einer Branderkennungsvorrichtung gemäß der vorliegenden Erfindung. Dargestellt ist ein schematischer Grundriß von zehn Räumen 24, von denen fünf mit einem ersten U-Ansaugrohrsystem 25 und die anderen fünf Räume mit einem zweiten U-Ansaugrohrsystem 26 ausgerüstet sind, welche über Verbindungsrohre 27, 28 an ein Detektorgehäuse 23 angeschlossen sind. Die Rohre der beiden U-Ansaugrohrsysteme 25, 26 sind in üblicher Weise mit Schellen od. dgl. an den Decken der Räume befestigt. Die U-Ansaugrohrsysteme 25, 26 sind auf der nach unten weisenden Seite mit Ansaugöffnungen versehen, durch welche von einem hier nicht dargestellten Lüfter in dem Detektorgehäuse 23 kontinuierlich ein repräsentativer Volumenanteil der Raumluft angesaugt und dem Detektorgehäuse zugeführt wird.

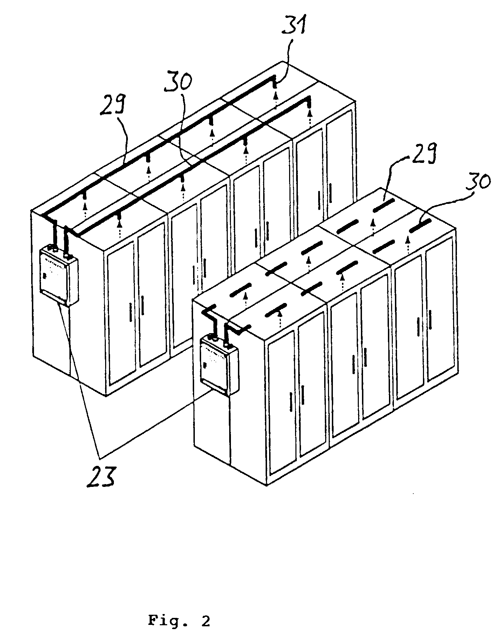

Fig. 2 zeigt das Prinzip einer Einrichtungsüberwachung für unbelüftete Schränke. Dargestellt sind zwei Gruppen von acht bzw. sechs Schränken, an deren Oberseite jeweils ein erstes I-Ansaugrohr 29 und ein zweites I-Ansaugrohr 30 verlegt sind, welche an einer Schrankseite wiederum in ein Detektorgehäuse 23 münden. Auch diese I-Ansaugrohre 29, 30 weisen nach unten gerichtete Ansaugöffnungen auf, die bei der Achter-Schrankgruppe beispielsweise durch je eine Knackung 31 etwas tiefer in das Schrankinnere hinein verlegt wurden. Bei der Sechser-Schrankgruppe sind die I-Ansaugrohre 29, 30 unterbrochen dargestellt, womit angedeutet wird, daß die beiden Ansaugrohre 29, 30 nicht auf den Schränken, sondern innerhalb der Schränke verlaufen.

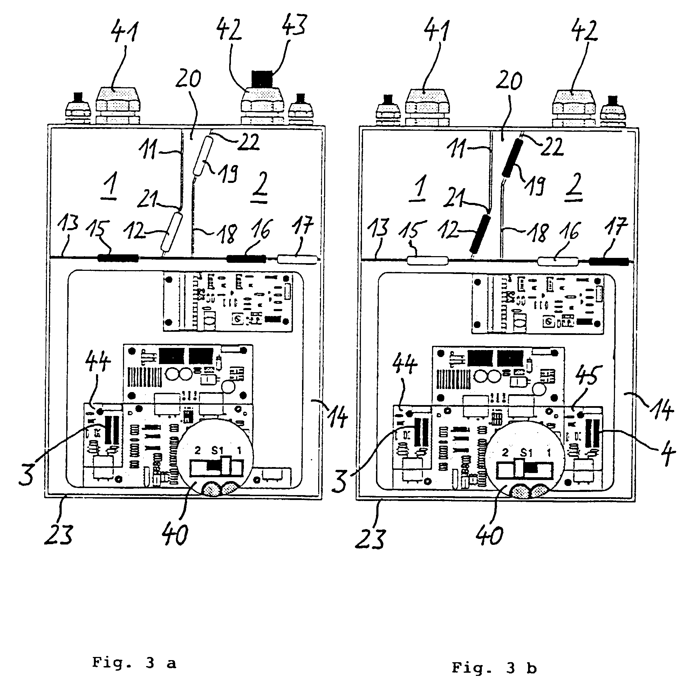

Die Fig. 3a und 3b zeigen jeweils eine Draufsicht auf eine schematische Darstellung des geöffneten Detektorgehäuses 23. Fig. 3a zeigt den Betrieb mit einem Ansaugrohr bzw. einem Ansaugrohrsystem, während Fig. 3b das für den Betrieb mit zwei Ansaugrohren bzw. zwei Ansaugrohrsystemen vorbereitete Detektorgehäuse 23 zeigt. In beiden Varianten besitzt das Detektorgehäuse 23 eine erste Melderkammer 1 mit einem (nicht dargestellten) ersten Detektor zum Erkennen einer Brandkenngröße, und eine zweite Melderkammer 2 mit einem (ebenfalls nicht dargestellten) zweiten Detektor zum Erkennen einer Brandkenngröße. Die beiden Melderkammern 1, 2 sind durch eine erste Trennwand 11 und durch eine zweite Trennwand 18 gegeneinander abgetrennt. Die beiden Trennwände 11, 18 verringern in zweckmäßiger Weise den Rauminhalt der beiden Melderkammern 1, 2, so daß zwischen den Trennwänden 11, 18 ein Zwischenraum 20 verbleibt. Des weiteren besitzt jede der beiden Trennwände 11, 18 einen einwärts in die zugehörige Melderkammer 1, 2 gerichteten Abschnitt 21, 22, durch welche die in die Melderkammern 1, 2 eintretende Luft auf die (nicht dargestellten) Detektoren gerichtet wird. Beide Trennwände 11, 18 weisen jeweils eine verschließbare Öffnung 12, 19 auf, die in Fig. 3a unverschlossen und in Fig. 3b verschlossen sind. In die Melderkammer 1 führt ein erster Lufteinlaß 41, in den beispielsweise das Verbindungsrohr 27 des ersten Ansaugrohrsystems 25 der Fig. 1 oder aber das erste I-Ansaugrohr 29 der Fig. 2 mündet. Entsprechend weist die Melderkammer 2 einen zweiten Lufteinlaß 42 auf, der bei der Variante der Fig. 3a durch einen Blindstopfen 43 verschlossen ist, während bei der Variante der Fig. 3b in diesen Lufteinlaß 42 beispielsweise das Verbindungsrohr 28 der Fig. 1 oder das I-Ansaugrohr 30 der Fig. 2 mündet.

Die beiden Melderkammern 1, 2 sind in Richtung der durchströmenden Luft durch eine zweite, durchgehende Trennwand 13 von einer Kammer 14 getrennt, in der sich außer dem Lüfter und den Luftstromsensoren 3, 4 auch die weiteren elektronischen Bauelemente der Branderkennungsvorrichtung befinden. Die Trennwand 13 weist für die Melderkammer 1 eine verschließbare Öffnung 15 und für die Melderkammer 2 zwei verschließbare Öffnungen 16, 17 auf. In der Fig. 3a sind die Öffnungen 15, 16 verschlossen dargestellt, während sie in Fig. 3b offen sind. Demgegenüber ist die Öffnung 17 in Fig. 3a geöffnet, während sie in Fig. 3b geschlossen ist. Der Sinn und Zweck dieser Öffnungen wird nachstehend noch beschrieben.

Die Luftstromsensoren 3, 4 sind als einzelne steckbare Module 44, 45 ausgebildet. Für den Betrieb mit nur einem Ansaugrohr bzw. Ansaugrohrsystem gemäß Fig. 3a ist nur ein Luftstromsensormodul 44 gesteckt, während bei der Betriebsversion für zwei Ansaugrohre bzw. Ansaugrohrsysteme zwei Luftstromsensoren 3, 4 auf zwei steckbaren Luftstromsensormodulen 44, 45 vorhanden sind.

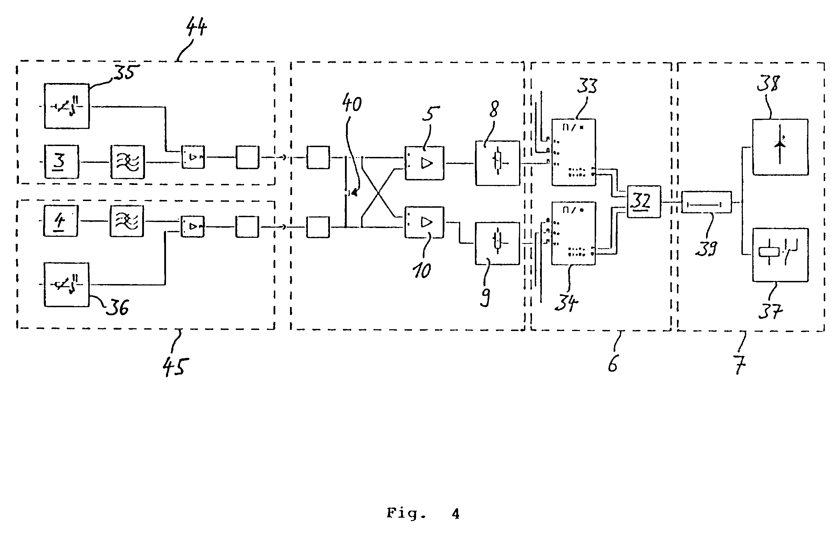

Fig. 4 zeigt ein Blockschaltbild einer Luftstromüberwachung, wie sie in einer Branderkennungsvorrichtung der Variante gemäß Fig. 3b, d.h. für zwei Ansaugrohre bzw. Ansaugrohrsysteme, zur Anwendung kommt. Das erste Luftstromsensormodul 44 enthält als hier interessierende Bauteile den Luftstromsensor 3 und einen Temperatursensor 35. Das zweite Luftstromsensormodul 45 enthält als hier interessierende Bauteile den Luftstromsensor 4 und einen Temperatursensor 36. Die weiteren, in den Modulen 44, 45 dargestellten Bauteile sind beispielsweise elektronische Filter, Schutzschaltungen und Temperatur-Kompensationseinrichtungen.

Die temperaturkompensierten Ausgangssignale der Luftstromsensoren 3, 4 werden innerhalb des zweiten gestrichelt umrandeten Schaltungsbereichs jeweils einem Differenzglied 5 und einem Summenglied 10 zugeführt, deren Ausgangssignale wiederum einem ersten Abgleichglied 8 bzw. einem zweiten Abgleichglied 9 zugeleitet werden. Anhand der Abgleichglieder 8, 9 wird das Differenzsignal des Differenzglieds 5 und das Summensignal des Summenglieds 10 im Betrieb der Vorrichtung mit voll funktionsfähigen Ansaugöffnungen auf Null abgeglichen. Dieser Nullabgleich wird zweckmäßigerweise bei Inbetriebnahme der Vorrichtung durchgeführt, wenn sichergestellt ist, daß das Ansaugrohrsystem komplett aufgebaut und abgedichtet ist und keine der Ansaugöffnungen eine Verschmutzung aufweist.

Die Ausgangssignale der Abgleichglieder 8, 9 werden einem ersten Komparator 33 bzw. einem zweiten Komparator 34 einer Auswerteschaltung 6 zugeführt. Die Komparatoren 33, 34 vergleichen die Ausgangssignale der Abgleichglieder 8, 9 mit einem vorgegebenen oberen und unteren Schwellenwert und erzeugen ein entsprechendes Ausgangssignal, wenn der obere Schwellenwert überschritten oder der untere Schwellenwert unterschritten wird. Die Ausgangssignale der Komparatoren 33, 34 sind mit einem ODER-Glied 32 verbunden, dessen Ausgangssignal einer Anzeigeeinheit 7 zugeführt wird.

Die Anzeigeeinheit 7 zeigt in Abhängigkeit des Ausgangssignals des ODER-Glieds 32 eine Funktionsstörung in jedem angeschlossenen Ansaugrohr bzw. Ansaugrohrsystem an. Zu diesem Zweck enthält die Anzeigeeinheit 7 ein Verzögerungsglied 39, ein Störungsrelais 37 und ein Display 38 in Form einer oder mehrerer LEDs. Die Funktion dieser Luftstromüberwachung wird nachstehend noch erläutert werden.

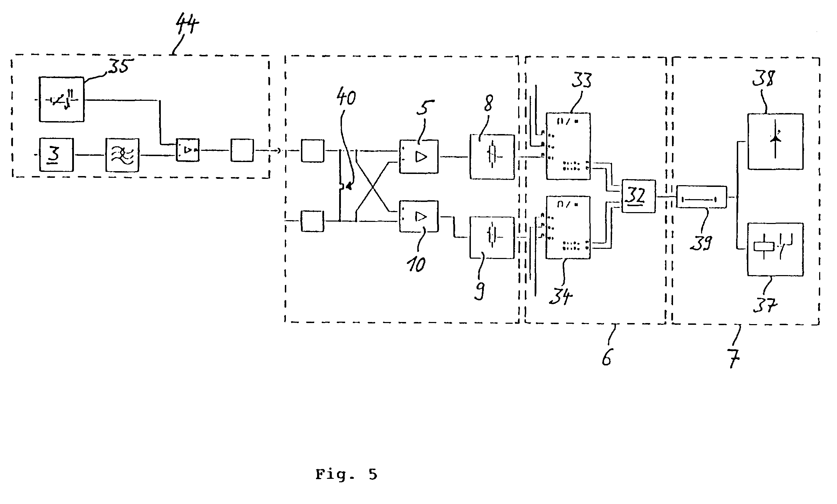

Entsprechend der Betriebsvariante für nur ein Ansaugrohr bzw. Ansaugrohrsystem gemäß Fig. 3a kann die Luftstromüberwachung auch mit nur einem Luftstromsensormodul betrieben werden, was in Fig. 5 dargestellt ist. Zu diesem Zweck kann der Schalter 40, der in dem Blockschaltbild vor dem Differenzglied 5 und dem Summenglied 10 zwischen den beiden Signalleitungen eingezeichnet ist, geschlossen werden. Dieser Schalter 40 ist mit seinen entsprechenden Stellungen in den Fig. 3a und 3b vergrößert dargestellt.

Im folgenden wird anhand der Fig. 3a, 3b und 4, 5 zunächst das Umrüsten der Branderkennungsvorrichtung von einem Betrieb mit zwei Ansaugrohren bzw. Ansaugrohrsystemen auf einen Betrieb mit nur einem Ansaugrohr bzw. Ansaugrohrsystem beschrieben.

Der Normalfall für die erfindungsgemäße Branderkennungsvorrichtung ist ein Betrieb mit zwei Ansaugrohren bzw. Ansaugrohrsystemen, wie es in den Fig. 1 und 2 dargestellt ist. Ein in Fig. 3b nicht dargestellter Lüfter in der Lüfterkammer 14 des Detektorgehäuses 23 saugt durch die Öffnungen 15, 16 durch die beiden Melderkammern 1, 2 und durch die an die Lufteinlässe 41, 42 angeschlossenen (aber in Fig. 3b nicht dargestellten) Ansaugrohre Luftproben aus den zu überwachenden Räumen bzw. Schränken oder Geräten. Die Luftproben werden als kontinuierliche Luftströmung über die in den Melderkammern 1, 2 angeordneten Detektoren zum Erkennen einer Brandkenngröße gezogen. Hierbei wird die Kontinuität der Luftströmung durch die Luftstromsensoren 3, 4 in der noch zu beschreibenden Weise überwacht.

Beim Betrieb mit nur einem Ansaugrohr bzw. Ansaugrohrsystem ist der zweite Lufteinlaß 42 durch einen Blindstopfen 43 verschlossen, während an den Lufteinlaß 41 wieder ein Ansaugrohr angeschlossen ist. Für diese Betriebsart werden die Öffnungen 15, 16 in der Trennwand 13 durch Blindstopfen verschlossen, während die Öffnungen 12, 19 in den beiden Trennwänden 11, 18 sowie die Öffnung 17 in der Trennwand 13 geöffnet werden. Der Lüfter (nicht dargestellt) saugt nun Luft durch die Öffnungen 17, 19, 12 und durch den Lufteinlaß 41 und das angeschlossene Ansaugrohr mit dessen Ansaugöffnungen durch die beiden Melderkammern 1, 2, welche nunmehr effektiv eine einzige Kammer mit zwei darin angeordneten Detektoren bilden. Dadurch entsteht eine Zweimelderabhängigkeit mit dem Vorteil einer niedrigeren Fehlalarmrate.

Im folgenden wird anhand der Fig. 4 und 5 die Funktionsweise der Luftstromüberwachung für beide Betriebsarten anhand des Beispiels einer Raumüberwachung gemäß Fig. 1 beschrieben.

In dem Blockschaltbild gemäß Fig. 4 ist der Schalter 40 zwischen der Signalleitung des ersten Luftstromsensormoduls 44 und der Signalleitung des zweiten Luftstromsensormoduls 45 offen. Dies entspricht einem Betrieb mit zwei Ansaugrohren bzw. Ansaugrohrsystemen und einer Vorbereitung des Detektorgehäuses 23 gemäß Fig. 3b. Das Differenzsignal des Differenzglieds 5 und das Summensignal des Summenglieds 10 wurden bei Inbetriebnahme der Branderkennungsvorrichtung auf Null eingestellt. Verstopft nun eine Ansaugöffnung im ersten Ansaugrohrsystem 25, so strömt weniger Luft durch das zweite Ansaugrohrsystem 26. Folglich wird das Ausgangssignal U1 des ersten Luftstromsensormoduls 44 kleiner, und das Ausgangssignal U2 des zweiten Luftstromsensormoduls 45 größer. Die Signaldifferenz beider Luftstromsensormodule zeigt also eine doppelte Änderung gegenüber den einzelnen Ausgangssignalen, und das Differenzsignal U1 - U2 ist negativ. Da aber nicht der gesamte, durch die Verstopfung im Ansaugrohrsystem 25 hervorgerufene Strömungsverlust durch die Steigerung des Luftdurchsatzes im zweiten Ansaugrohrsystem 26 ausgeglichen wird, ist das Summensignal U1 + U2 ebenfalls negativ. Die Auswertung sowohl des Differenzsignals als auch des Summensignals ermöglicht eine genaue Identifizierung der Störungsursache. Ist nämlich bei negativem Summensignal (U1 + U2) das Differenzsignal (U1 - U2) gleich Null, so liegt eine gleichmäßige Verstopfung in beiden Ansaugrohrsystemen 25, 26 vor. Ist demgegenüber - immer noch bei negativem Summensignal - das Differenzsignal auch negativ, so liegt eine Verstopfung im Ansaugrohrsystem 25 vor, während bei positivem Differenzsignal eine Verstopfung im Ansaugrohrsystem 26 vorliegt. Ist bei positivem Summensignal das Differenzsignal negativ, deutet das auf einen Rohrbruch im Ansaugrohrsystem 26 hin, während - immer noch bei positivem Summensignal - ein positives Differenzsignal auf einen Rohrbruch im Ansaugrohrsystem 25 hinweist.

Der große Vorteil der beschriebenen Branderkennungsvorrichtung und Luftstromüberwachung mit zwei Luftstromsensoren und der Bildung eines Differenzsignals aus den beiden Ausgangssignalen der Luftstromsensoren liegt darin, daß die Umgebungsparameter, und hier hauptsächlich die Luftdruckschwankungen, keinen Einfluß mehr auf die Luftstromüberwachung haben, da sich die Umgebungsparameter gleichzeitig auf beide Luftstromsensoren und beide Ansaugrohrsysteme auswirken, die Signaldifferenz hiervon allerdings unberührt bleibt. Die entsprechende Entscheidungsmatrix für die Auswerteeinheit 6 lautet demgemäß wie folgt:

| | |
|---|---|
| *U1 + U2 < 0 ⇒ | Verstopfung |
| *U1 - U2 = 0 ⇒ | gleichmäßige Verstopfung in beiden Ansaugrohrsystemen |
| *U1 - U2 < 0 ⇒ | Verstopfung im Ansaugrohrsystem 25 |
| *U1 - U2 > 0 ⇒ | Verstopfung im Ansaugrohrsystem 26 |
| *U1 + U2 > 0 ⇒ | Rohrbruch |
| *U1 - U2 < 0 ⇒ | Rohrbruch im Ansaugrohrsystem 26 |
| *U1 - U2 > 0 ⇒ | Rohrbruch im Ansaugrohrsystem 25 |

Fig. 5 zeigt ein Blockschaltbild für eine Luftstromüberwachung in der Betriebsart mit einem Ansaugrohr bzw. Ansaugrohrsystem. Das Blockschaltbild entspricht weitestgehend dem der Fig. 4; jedoch ist in dem Schaltbild gemäß Fig. 5 nur das erste Luftstromsensormodul 44 gesteckt und der Schalter 40 ist geschlossen. In dieser Betriebsart ist das Differenzsignal des Differenzglieds 5 immer Null und die Auswertung erfolgt allein über das Summensignal des Summenglieds 10.

## Patentansprüche

1. Verfahren zur Luftstromüberwachung in einer Branderkennungsvorrichtung, die mittels eines Lüfters kontinuierlich Raum- oder Geräteluft durch ein erstes und ein zweites Ansaugrohr oder Ansaugrohrsystem (25,26) ansaugt und wenigstens einem Detektor zum Erkennen einer Brandkenngröße zuführt, gekennzeichnet durch folgende Verfahrensschritte:
a) ein erster Luftstromsensor (3) überwacht den Massenstrom der durch das erste Ansaugrohr bzw. Ansaugrohrsystem (25) zugeführten Luft auf Änderungen;
b) ein zweiter Luftstromsensor (4) überwacht den Massenstrom der durch das zweite Ansaugrohr bzw. Ansaugrohrsystem (26) zugeführten Luft auf Änderungen;
c) es wird die Differenz des Ausgangssignals des ersten Luftstromsensors (3) und des Ausgangssignals des zweiten Luftstromsensors (4) gebildet;
d) das Differenzsignal wird auf Null abgeglichen, und
e) die Auswertung zur Luftstromüberwachung erfolgt anhand des abgeglichenen Differenzsignals.

2. Verfahren zur Luftstromüberwachung in einer Branderkennungsvorrichtung, die mittels eines Lüfters kontinuierlich Raum- oder Geräteluft durch ein erstes und ein zweites Ansaugrohr oder Ansaugrohrsystem (25,26) ansaugt und wenigstens einem Detektor zum Erkennen einer Brandkenngröße zuführt, gekennzeichnet durch folgende Verfahrensschritte:
a) ein erster Luftstromsensor (3) überwacht den Massenstrom der durch das erste Ansaugrohr bzw. Ansaugrohrsystem (25) zugeführten Luft auf Änderungen;
b) ein zweiter Luftstromsensor (4) überwacht den Massenstrom der durch das zweite Ansaugrohr bzw. Ansaugrohrsystem (26) zugeführten Luft auf Änderungen;
c) es werden sowohl die Differenz als auch die Summe des Ausgangssignals des ersten Luftstromsensors (3) und des Ausgangssignals des zweiten Luftstromsensors (4) gebildet;
d) sowohl das Differenzsignal als auch das Summensignal wird auf Null abgeglichen; und
e) die Auswertung zur Luftstromüberwachung erfolgt anhand der abgeglichenen Differenz- bzw. Summensignale.

3. Branderkennungsvorrichtung zur Durchführung des Verfahrens gemäß einem der Ansprüche 1 oder 2,
mit einem ersten Detektor zum Erkennen einer Brandkenngröße in einer ersten Melderkammer (1), dem durch ein erstes Ansaugrohr oder Ansaugrohrsystem mittels eines Lüfters ein repräsentativer Volumenanteil einer Raum- oder Geräteluft zugeführt wird, und mit einem ersten Luftstromsensor (3), mit dem der Massenstrom der durch das erste Ansaugrohr bzw. das erste Ansaugrohrsystem zugeführten Luft auf Änderungen überwacht wird, gekennzeichnet durch
a) ein zweites Ansaugrohr oder Ansaugrohrsystem, durch das ebenfalls ein repräsentativer Volumenanteil einer Raum- oder Geräteluft angesaugt wird,
b) einen zweiten Luftstromsensor (4) zur Überwachung des Massenstroms der durch das zweite Ansaugrohr bzw. Ansaugrohrsystem zugeführten Luft auf Änderungen;
c) ein Differenzglied (5), dem die Ausgangssignale des ersten Luftstromsensors (3) und des zweiten Luftstromsensors (4) zugeführt werden;
d) ein erstes Abgleichglied (8) zum Nullabgleich des Differenzsignals des Differenzglieds (5) ;
e) eine Auswerteschaltung (6) mit je einem vorgebbaren unteren und oberen Schwellenwert, der das Ausgangssignal des ersten Abgleichglieds (8) zugeführt wird; und durch
f) eine Anzeigeeinheit (7), die in Abhängigkeit des Ausgangssignals der Auswerteschaltung (6) eine Störung anzeigt.

4. Branderkennungsvorrichtung nach Anspruch 3,
gekennzeichnet durch
e) ein Summenglied (10), dem ebenfalls die Ausgangssignale des ersten und des zweiten Luftstromsensors (3, 4) zugeführt werden;
f) ein zweites Abgleichglied (9) zum Nullabgleich des Summensignals des Summenglieds (10), wobei das Ausgangssignal des zweiten Abgleichglieds (9) ebenfalls der Auswerteschaltung (6) zugeführt wird.

5. Branderkennungsvorrichtung nach Anspruch 3 oder 4,
gekennzeichnet durch
einen zweiten Detektor zum Erkennen einer Brandkenngröße in einer zweiten Melderkammer (2), dem ebenfalls ein repräsentativer Volumenanteil einer Raum- oder Geräteluft zugeführt wird;
eine erste Trennwand (11) zwischen der ersten und der zweiten Melderkammer (1, 2); und durch
eine verschließbare Öffnung (12) in der ersten Trennwand (11), welche die Innenräume der beiden Melderkammern (1, 2) miteinander verbindet.

6. Branderkennungsvorrichtung nach einem der Ansprüche 3 bis 5,
gekennzeichnet durch
eine zweite Trennwand (13), welche die erste und zweite Melderkammer (1, 2) in Richtung der durchströmenden Luft von einer Lüfterkammer (14) trennt; und durch wenigstens je eine weitere verschließbare Öffnung (15, 16) in der zweiten Trennwand (13), welche die erste Melderkammer (1) bzw. die zweite Melderkammer (2) mit der Lüfterkammer (14) verbindet.

7. Branderkennungsvorrichtung nach Anspruch 6,
dadurch gekennzeichnet,
daß eine der Melderkammern (1, 2) mittels zwei verschließbarer Öffnungen (16, 17) mit der Lüfterkammer (14) verbunden ist.

8. Branderkennungsvorrichtung nach einem der Ansprüche 5 bis 7,
gekennzeichnet durch eine dritte Trennwand (18) zwischen der ersten und der zweiten Melderkammer (1, 2), und durch eine verschließbare Öffnung (19) in der dritten Trennwand (18), wobei zwischen der ersten und der dritten Trennwand (11, 18) ein Zwischenraum (20) verbleibt.

9. Branderkennungsvorrichtung nach Anspruch 8,
dadurch gekennzeichnet,
daß die erste und die dritte Trennwand (11, 18) je einen einwärts in die zugehörige Melderkammer (1, 2) gerichteten Abschnitt (21, 22) aufweisen.

## Claims

1. Method of monitoring the air flow in a fire-detecting device which, by means of a fan, draws air from the room or from the apparatus continuously through a first and a second intake pipe or intake pipe system (25, 26) and feeds it to at least one detector for detecting a fire parameter, characterised by the following steps:
a) a first air flow sensor (3) monitors variations in the mass flow of the air fed though the first intake pipe or intake pipe system (25);
b) a second air flow sensor (4) monitors variations in the mass flow of the air fed through the second intake pipe or intake pipe system (26);
c) the difference between the output signal of the first air flow sensor (3) and the output signal of the second air flow sensor (4) is established;
d) the differential signal is adjusted to zero, and
e) the monitoring of the air flow is evaluated by way of the adjusted differential signal.

2. Method of monitoring the air flow in a fire-detecting device which, by means of a fan, draws air from the room or from the apparatus continuously through a first and a second intake pipe or intake pipe system (25, 26) and feeds it to at least one detector for detecting a fire parameter, characterised by the following steps:
a) a first air flow sensor (3) monitors variations in the mass flow of the air fed though the first intake pipe or intake pipe system (25);
b) a second air flow sensor (4) monitors variations in the mass flow of the air fed through the second intake pipe or intake pipe system (26);
c) both the difference between and the sum of the output signal of the first air flow sensor (3) and the output signal of the second air flow sensor (4) are established;
d) both the differential signal and the summation signal are adjusted to zero, and
e) the monitoring of the air flow is evaluated by way of the adjusted differential and summation signals.

3. Fire-detecting device for carrying out the method according to either of claims 1 or 2, comprising a first detector for detecting a fire parameter in a first alarm chamber (1) to which a representative volume of air from the room or from the apparatus is fed by means of a fan via a first intake pipe or intake pipe system, and a first air flow sensor (3) by means of which variations in the mass flow of the air fed through the first intake pipe or the first intake pipe system are monitored, characterised by
a) a second intake pipe or intake pipe system through which a representative volume of air from the room or from the apparatus is drawn,
b) a second air flow sensor (4) for monitoring variations in the mass flow of the air fed through the second intake pipe or intake pipe system;
c) a differential element (5) to which the output signals of the first air flow sensor (3) and the second air flow sensor (4) are fed;
d) a first adjusting element (8) for zero adjustment of the differential signal of the differential element (5);
e) an evaluation circuit (6) with predetermined upper and lower threshold values to which the output signal of the first adjusting element (8) is fed, and
f) a display unit (7) which indicates malfunction as a function of the output signal of the evaluation circuit (6).

4. Fire-detecting device according to claim 3, characterised by
e) a summation element (10) to which the output signals of the first and the second air flow sensor (3, 4) are also fed, and
f) a second adjusting element (9) for zero adjustment of the summation signal of the summation element (10), the output signal of the second adjusting element (9) also being fed to the evaluation circuit (6).

5. Fire-detecting device according to claim 3 or claim 4, characterised by a second detector for detecting a fire parameter in a second alarm chamber (2) to which a representative volume of air from the room or from the apparatus is also fed, a first partition wall (11) between the first and the second alarm chamber (1, 2) and a closable opening (12) in the first partition wall (11) which connects together the inner spaces of the two alarm chambers (1, 2).

6. Fire-detecting device according to one of claims 3 to 5, characterised by a second partition wall (13) which separates the first and the second alarm chamber (1, 2) in the direction of the air flowing through from one fan chamber (14) and at least one further closable opening (15, 16) in the second partition wall (13) which connects the first alarm chamber (1) or the second alarm chamber (2) to the fan chamber (14).

7. Fire-detecting device according to claim 6, characterised in that one of the alarm chambers (1, 2) is connected by means of two closable openings (16, 17) to the fan chamber (14).

8. Fire-detecting device according to one of claims 5 to 7, characterised by a third partition wall (18) between the first and the second alarm chamber (1, 2) and a closable opening (19) in the third partition wall (18), an intermediate space (20) remaining between the first and the third partition wall (11, 18).

9. Fire-detecting device according to claim 8, characterised in that the first and the third partition wall (11, 18) each have a portion (21, 22) directed inwards into the associated alarm chamber (1, 2).

## Revendications

1. Procédé de contrôle du flux d'air dans un dispositif de détection d'incendie qui, au moyen d'une soufflante, aspire en continu l'air d'un local ou d'un appareil par un premier et un deuxième tuyaux d'aspiration ou systèmes de tuyaux d'aspiration (25, 26) et l'apporte à au moins un détecteur pour déceler une grandeur caractéristique d'incendie, **caractérisé** par les étapes suivantes :
a) un premier capteur de flux d'air (3) surveille les modifications du débit massique de l'air apporté par le premier tuyau d'aspiration ou système de tuyaux d'aspiration (25),
b) un deuxième capteur de flux d'air (4) surveille les modifications du débit massique de l'air apporté par le deuxième tuyau d'aspiration ou système de tuyaux d'aspiration (26),
c) on forme la différence du signal de sortie du premier capteur de flux d'air (3) et du signal de sortie du deuxième capteur de flux d'air (4),
d) le signal de différence est compensé à zéro, et
e) l'interprétation pour le contrôle du flux d'air s'effectue à l'aide du signal de différence compensé.

2. Procédé de contrôle du flux d'air dans un dispositif de détection d'incendie qui, au moyen d'une soufflante, aspire en continu l'air d'un local ou d'un appareil par un premier et un deuxième tuyaux d'aspiration ou systèmes de tuyaux d'aspiration (25, 26) et l'apporte à au moins un détecteur pour déceler une grandeur caractéristique d'incendie, **caractérisé** par les étapes suivantes :
a) un premier capteur de flux d'air (3) surveille les modifications du débit massique de l'air apporté par le premier tuyau d'aspiration ou système de tuyaux d'aspiration (25),
b) un deuxième capteur de flux d'air (4) surveille les modifications du débit massique de l'air apporté par le deuxième tuyau d'aspiration ou système de tuyaux d'aspiration (26),
c) on forme à la fois la différence et la somme du signal de sortie du premier capteur de flux d'air (3) et du signal de sortie du deuxième capteur de flux d'air (4),
d) tant le signal de différence que le signal de somme sont compensés à zéro, et
e) l'interprétation pour le contrôle du flux d'air s'effectue à l'aide des signaux compensés de différence et de somme.

3. Dispositif de détection d'incendie pour la mise en oeuvre du procédé selon la revendication 1 ou 2,
comportant un premier détecteur pour déceler une grandeur caractéristique d'incendie dans une première chambre de détection (1), auquel est apporté, par un premier tuyau d'aspiration ou système de tuyaux d'aspiration et au moyen d'une soufflante, une part volumique représentative de l'air d'un local ou d'un appareil, et comportant un premier capteur de flux d'air (3), qui surveille les modifications du débit massique de l'air apporté par le premier tuyau d'aspiration ou système de tuyaux d'aspiration, **caractérisé** par
a) un deuxième tuyau d'aspiration ou système de tuyaux d'aspiration, par lequel on aspire également une part volumique représentative de l'air d'un local ou d'un appareil,
b) un deuxième capteur de flux d'air (4), pour surveiller les modifications du débit massique de l'air apporté par le deuxième tuyau d'aspiration ou système de tuyaux d'aspiration,
c) un élément soustracteur (5), auquel sont apportés les signaux de sortie du premier capteur de flux d'air (3) et du deuxième capteur de flux d'air (4),
d) un premier élément compensateur (8) pour compenser à zéro le signal de différence de l'élément soustracteur (5),
e) un montage d'interprétation (6), avec des valeurs de seuil prédéterminables respectives, inférieure et supérieure, auquel est apporté le signal de sortie du premier élément compensateur (8), et
f) une unité d'affichage (7), qui affiche une défaillance en fonction du signal de sortie du montage d'interprétation (6).

4. Dispositif de détection d'incendie selon la revendication 3, **caractérisé** par
g) un élément additionneur (10), auquel sont également apportés les signaux de sortie du premier capteur de flux d'air (3) et du deuxième capteur de flux d'air (4),
h) un deuxième élément compensateur (9) pour compenser à zéro le signal de somme de l'élément additionneur (10), le signal de sortie du deuxième élément compensateur (9) étant également apporté au montage d'interprétation (6).

5. Dispositif de détection d'incendie selon la revendication 3 ou 4, **caractérisé** par
un deuxième détecteur pour déceler une grandeur caractéristique d'incendie dans une deuxième chambre de détection (2), auquel est également apportée une part volumique représentative de l'air d'un local ou d'un appareil,
une première cloison séparatrice (11) entre la première chambre de détection (1) et la deuxième chambre de détection (2), et
une ouverture pouvant être fermée (12) dans la première cloison séparatrice (11), qui relie entre eux les espaces intérieurs des deux chambres de détection (1, 2).

6. Dispositif de détection d'incendie selon l'une quelconque des revendications 3 à 5, **caractérisé** par une deuxième cloison séparatrice (13), qui sépare la première et la deuxième chambres de détection (1, 2), dans la direction de l'air circulant, d'une chambre de soufflante (14); et par au moins une ouverture supplémentaire respective (15, 16), pouvant être fermée, dans la deuxième cloison séparatrice (13), ouverture qui relie respectivement la première chambre de détection (1) ou la deuxième chambre de détection (2) à la chambre de soufflante (14).

7. Dispositif de détection d'incendie selon la revendication 6, **caractérisé** en ce qu'une des chambres de détection (1, 2) est reliée à la chambre de soufflante (14) au moyen de deux ouvertures pouvant être fermées (16, 17).

8. Dispositif de détection d'incendie selon l'une quelconque des revendications 5 à 7, **caractérisé** par une troisième cloison séparatrice (18) entre la première chambre de détection (1) et la deuxième chambre de détection (2), et par une ouverture pouvant être fermée (19) dans la troisième cloison séparatrice (18), un espace intermédiaire (20) restant présent entre la première cloison séparatrice (11 ) et la troisième cloison séparatrice (18).

9. Dispositif de détection d'incendie selon la revendication 8, **caractérisé** en ce que la première et la troisième cloisons séparatrices (11, 18) comportent chacune une partie (21, 22) dirigée vers l'intérieur dans la chambre de détection associée (1, 2).
